# EUROPÄISCHE PATENTSCHRIFT

(11) **EP 3 374 464 B1**
(45) Veröffentlichungstag und Bekanntmachung des Hinweises auf die Patenterteilung: **19.05.2021**
(21) Anmeldenummer: 16794214.3
(22) Anmeldetag: 09.11.2016
(51) Int. Cl.: C09K 11/06, C09K 11/02, B32B 27/30, C08L 33/12, D21H 21/40, B42D 25/00, C09K 9/02, C09B 67/46, C09B 67/02, B42D 25/36, B42D 25/29, B42D 25/382, B42D 25/387, B42D 25/30

(54) **SICHERHEITSPIGMENT, LUMINESZIERENDES POLYMERHARZ UND VERFAHREN ZUM HERSTELLEN DESSELBEN**
SECURITY PIGMENT, LUMINESCENT POLYMER RESIN AND METHOD FOR PRODUCING SAME
PIGMENT DE SÉCURITÉ, RÉSINE POLYMÈRE LUMINESCENTE ET PROCÉDÉ DE PRODUCTION

(30) Priorität: 11.11.2015 DE 102015014526
(43) Veröffentlichungstag der Anmeldung: 19.09.2018
(73) Patentinhaber: Giesecke+Devrient Currency Technology GmbH, 81677 München (DE)
(72) Erfinder: KECHT, Johann, 81677 München (DE); SCHLOSSBAUER, Axel, 80799 München (DE)
(86) Internationale Anmeldenummer: PCT/EP2016/001864
(87) Internationale Veröffentlichungsnummer: WO 2017/080655

(56) Entgegenhaltungen:
- EP-A1- 1 445 988
- EP-B1- 0 226 367
- WO-A1-02/40600
- DE-A1-102006 048 638
- US-A1- 2014 197 364
- US-A1- 2014 286 875

## Beschreibung

Die Erfindung betrifft ein Sicherheitspigment, insbesondere ein Sicherheitspigment auf Basis eines lumineszierenden Polymerharzes und ein Verfahren zum Herstellen desselben.

Die Erfindung betrifft insbesondere eine Methode zur Herstellung eines Sicherheitspigments, z.B. eines lumineszierenden Druckpigments mittels Einbringung von thermoplastischen Polymerpartikeln, in denen der lumineszierende Leuchtstoff jeweils gelöst vorliegt, in eine Duromer-Matrix. Durch die molekulare Verteilung des Leuchtstoffes in den thermoplastischen Polymerpartikeln kann die Menge des Farbstoffs, die zum Erreichen einer bestimmten Leuchtkraft benötigt wird, stark reduziert werden. Das anschließende Einbringen in eine Duromer-Matrix schützt den Farbstoff zusätzlich vor Angriffen mit einem das Polymer lösende Lösemittel sowie wässrigen Säuren und Basen.

Die Druckschrift US 5795379 A beschreibt die Einbringung lumineszierender Farbstoffe in ein festes Harz. Die Schrift behandelt lediglich die Verwendung von Polyisocyanaten als Duromer-Matrix sowie Verfahren zur Herstellung einer solchen. Das Einbringen eines in einem zweiten Polymer gelösten Farbstoffes wird in der Schrift nicht erwähnt. Es wird nur ein unzureichender Schutz vor wässrigen Säuren und Basen erreicht, darüber hinaus ist für das Erreichen einer großen Helligkeit viel Leuchtstoff erforderlich.

Die Druckschrift DE 102006008245 A1 beschreibt das direkte Umhüllen eines organischen Lumineszenzstoffs mit einer organischen oder anorganischen Hülle oder mit mehreren organischen oder anorganischen Hüllen für das Erhöhen der Lichtechtheit des umhüllten Farbstoffs. In diesem Fall wirkt das den eingebrachten Farbstoff umhüllende Polymer als eine gegen Lichteinwirkung schützende Hülle.

Demgegenüber liegen in der vorliegenden Erfindung die Lumineszenzfarbstoffe in einem Polymer gelöst vor, was die Menge des Farbstoffs die zum Erreichen einer bestimmten Leuchtkraft benötigt wird stark reduziert. Durch das zusätzliche Einbringen in eine Duromer- Matrix wird ein komplementärer Schutz des Merkmalstoffs vor chemischen Angriffen durch Lösemittel sowie wässrigen Säuren und Basen erzielt. Die Duromer-Matrix fungiert in diesem Fall nicht als typische Hülle eines vereinzelten Kern-Hülle-Teilchens, sondern eher als Kitt welches mehrere Kerne umgibt. Dies bietet herstellungstechnische Vorteile wie z.B. eine Vermahlbarkeit ohne Verlust der komplementären Schutzwirkung.

Die Druckschrift EP 1208382 B1 beschreibt die Einbettung verschiedener diskreter Farbpartikel, z.B. fluoreszierende Microbeads aus Polystyrol, in eine Matrix sowie deren anschließende Umhüllung mit einer dichten Schale, die als Diffusionsbarriere wirkt. Auch dieser Stand der Technik wendet das Umhüllen der Farbstoffe als Schutz gegenüber wässrigen, äußeren Einflüssen an. Diese Lösung ist technisch aufwändig und im Hinblick auf große Produktionsmengen schlecht skalierbar, da z.B. beim Vermahlen mikroverkapselter Partikel die Hülle beschädigt wird und damit deren Schutzwirkung verloren geht.

Die Druckschrift EP 0226367 B1 beschreibt die Agglomeration fluoreszierender Kondensationspolymerpartikel mit verschiedenen Polymeren zu großen Agglomeratpartikeln. Dieses Verfahren ist technisch aufwändig, da es schwer ist, Fluoreszenzstoffe in hinreichend fein verteilter Form innerhalb von Kondensationspolymeren zu lösen.

Dieses Problem wird gemäß der vorliegenden Erfindung durch den Einsatz von Thermoplasten umgangen. Außerdem bieten hydrophobe Thermoplaste einen besseren Schutz gegenüber wässrigen Säuren und Laugen.

Die EP 1445 998 A1 beschreibt ein organisches, elektrolumineszierendes Element mit einem makroskopischen Glassubstrat, das zur Bereitstellung eines Farbkonvertierungselements mit einem speziellen Film in einer Dicke im Bereich von 1 bis 100 Mikrometer beschichtet wird (siehe die Absätze [0086] und [0088]). Der makroskopische Film basiert auf einem Bindemittelharz, z.B. ein Epoxyharz (siehe Absatz [0068]), das die Grundlage des auf dem Glassubstrat vorliegenden makroskopischen Farbkonvertierungselements bildet. Im Bindemittelharz eingebettet sind besondere Pigmente, deren gegenständliche Beschaffenheit dadurch zustande kommt, dass ein fluoreszierender Farbstoff in ein weiteres Harz, z.B. Polymethacrylsäureester, eingebracht wird (siehe der Absatz [0067]).

Die EP 0 226 367 B1 beschreibt Körnchen auf Basis eines Bindmittelharzes, in dem Pigmentpartikel, gegebenenfalls auch agglomerierte Pigmentpartikel, eingebettet sind.

Die WO 02/40600 A1 beschreibt Interferenzpigmentflakes und -folien, die Lumineszenz- und Farbverschiebungseigenschaften aufweisen. Es ist eine Beschichtungsstruktur aus Lumineszenzmaterial vorgesehen, die ein farbverschiebendes Pigmentflake teilweise bedeckt oder einkapselt oder die Außenfläche einer Folie bedeckt. Die Pigmentflakes können eine symmetrische Beschichtungsstruktur auf gegenüberliegenden Seiten einer Kernschicht aufweisen oder eine asymmetrische Beschichtungsstruktur mit allen Schichten auf einer Seite der Kernschicht oder mit Einkapselungsbeschichtungen um die Kernschicht herum gebildet werden. Die Beschichtungsstruktur der Flakes und Folien umfasst eine Kernschicht, eine über der Kernschicht liegende dielektrische Schicht und eine über der dielektrischen Schicht liegende Absorberschicht. Die lumineszierenden Pigmentflakes und -folien zeigen eine diskrete Farbverschiebung. Die lumineszierenden Pigmentflakes können in flüssige Medien wie Farben oder Tinten eingebracht werden, um Farbmaterialien für das spätere Aufbringen auf Gegenstände oder Papier herzustellen.

Der vorliegenden Erfindung liegt die Aufgabe zugrunde, ein gegenüber dem Stand der Technik verbessertes lumineszierendes Druckpigment bereitzustellen. Des Weiteren liegt der vorliegenden Erfindung die Aufgabe zugrunde, eine gegenüber dem Stand der Technik verbesserte Methode zur Herstellung eines lumineszierenden Druckpigments bereitzustellen.

Diese Aufgaben werden durch die in den unabhängigen Ansprüchen definierten Merkmalskombinationen gelöst. Weiterbildungen der Erfindung sind Gegenstand der Unteransprüche.

### Ausführliche Beschreibung der Erfindung

Die vorliegende Erfindung beinhaltet eine vorteilhafte Weiterentwicklung der aus der Druckschrift US 5795379 A bekannten Methode der Einbringung lumineszierender Farbstoffe in ein festes Harz. Im erfindungsgemäßen Prozess werden die Lumineszenzfarbstoffe bzw. Merkmalsstoffe nicht direkt mit den Komponenten des Harzes extrudiert, sondern in einem vorgelagerten Schritt in Kügelchen (oder Partikeln) aus thermoplastischem Polymer gelöst. Die Konzentration des im Polymer gelösten Farbstoffes liegt dabei vorzugsweise in einem Bereich von 0,01% bis 15%. Durch diesen vorgelagerten Prozess-Schritt ist es verglichen mit einem direkt in ein Harz extrudierten organischen Farbstoff möglich, die gleiche Helligkeit des Endprodukts mit einer wesentlich geringeren Menge, z.B. 10% bis 60%, an organischem lumineszierenden Stoff zu erreichen.

In der vorliegenden Erfindung handelt es sich ausdrücklich nicht um Kern-Schale-Teilchen mit definierter einheitlicher Geometrie.

Ein weiterer Vorteil des erfindungsgemäßen Erzeugnisses liegt in der Stabilisierung der im Polymer gelösten organischen Farbstoffe gegenüber wässrigen Säuren und Basen. Eine vollständige durchgängige Umhüllung des Polymers mit dem umhüllenden, kondensierten Harz ist hierfür nicht ausschlaggebend, im Gegensatz zu den in der Schrift EP 1208382 B1 beschriebenen Pigmenten. Das den Lumineszenzfarbstoff bzw. Merkmalsstoff enthaltende Polymer (zum Beispiel PMMA) wirkt infolge seiner schlechten Benetzbarkeit mit wässrigen Lösungen als eine Barriere gegenüber wässrigen Säuren und Basen und verringert so den Kontakt zwischen den gelösten, labilen Farbstoffen und den Säuren und Basen.

Die Einbettung der stabilen Polymerkugeln in ein Harz ermöglicht weiterhin das einfache Einstellen der für den jeweiligen Druckprozess vorteilhaften Pigment-Korngröße mittels Zermahlen, was eine einfache und kostengünstige Skalierbarkeit des Produktionsprozesses zur Folge hat.

Des Weiteren ermöglicht die Einbettung verschiedenfarbiger Kugeln auf einfache Art und Weise das Einstellen des gewünschten Lumineszenzfarbtons durch additive Farbmischung. Gemäß einer bevorzugten Ausführung werden verschiedene Farbstoffe gemeinsam in das Polymer eingebracht, um den gewünschten Lumineszenzfarbton durch additive Farbmischung einzustellen.

Das erfindungsgemäße Herstellungsverfahren ist zweistufig. Im ersten Herstellungsschritt wird der lumineszierende organische Stoff bzw. Merkmalsstoff in einem thermoplastischen Polymer gelöst. Hierfür wird das Polymer (zum Beispiel Polymethylmethacrylat oder Polystyrol) gemeinsam mit dem lumineszierenden Stoff oder einem anderen Merkmalsstoff in einem geeigneten organischen Lösemittel (zum Beispiel Dichlormethan) gelöst. Um das Polymer mit dem gelösten Farbstoff bzw. Merkmalsstoff wieder in eine feste Form zu überführen, kann man verschiedene Synthesepfade wählen. Bevorzugt wird die Polymer-Lösung mithilfe eines Tensids (zum Beispiel Natrium-Dodecylsulfat) in Wasser dispergiert und das Lösemittel durch einfache Verdunstung aus der Mischung entfernt. Eine weitere Möglichkeit ist das Ausfällen des Polymers (inklusive des gelösten Farbstoffes/Merkmalsstoffes) in Diethylether mit anschließendem (insbesondere unter Kühlung vorgenommenem) Zermahlen auf die gewünschte Korngröße. Die bevorzugte Korngröße (d99) der Polymerpartikel beträgt weniger als 7 µm, besonders bevorzugt weniger als 3 µm.

Die Thermoplast-Kerne bestehen aus thermoplastischen Polymeren, bevorzugt aus einem thermoplastischen, unvernetzten Polymer. Gemäß einer bevorzugten Ausführungsform besteht das Polymer des Kernmaterials aus polymerisierten Ethylenderivaten, weiter bevorzugt aus Polystyrol (PS) oder Polyacrylaten, darunter bevorzugt aus Polymethylmethacrylat (PMMA), Polyvinylacetat (PVAC), Polyvinylchlorid (PVC) oder Polyacrylnitril (PAN) oder aus einem eines oder mehrere der vorgenannten Polymere enthaltenden Copolymer, z.B. Acrylnitril-Butadien-StyrolCopolymer (ABS). Gemäß einer weiteren bevorzugten Ausführungsform handelt es sich bei den Ethylenderivaten um Polyethylen (PE), Polypropylen (PP) oder andere, aus aliphatischen Kohlenstoffketten aufgebaute Polymere. Gemäß einer weiteren bevorzugten Ausführungsform besteht das Polymer des Kernmaterials aus Polycarbonaten (PC), Polyamiden (PA) oder Polyestern, z.B. Polyethylenterephthalat (PET).

Die Kettenlängen der Polymere des Kernmaterials liegen dabei bevorzugt in einem Bereich von 1000 bis 1 000 000 g/mol, besonders bevorzugt in einem Bereich von 50 000 bis 250 000 g/mol.

Nach Beendigung des ersten Syntheseschritts werden die gemäß der obigen Beschreibung hergestellten Polymerpartikel im zweiten Herstellungsschritt als lumineszierende Stoffe in eine Duromermatrix eingebracht. Hierfür können die Polymerpartikel gemeinsam mit den Rohstoffen des verwendeten Harz-Typs (zum Beispiel Polyurethanharz oder Polyharnstoffharz) extrudiert oder verknetet werden. Die Konzentration der Polymerpartikel in der Mischung liegt in einem Bereich von 0,1% bis 25%, bevorzugt in einem Bereich von 3% bis 20% (d.h. Gewichtsprozent). Nach Beendigung des Extrusions- oder Knetprozesses wird das erhaltene, die Polymerpartikel enthaltende Harz zu einem Harzpulver zermahlen, wobei die Korngröße hinsichtlich des gewünschten Druckprozesses eingestellt werden kann.

Es werden für das Erzeugen der mit den Thermoplast-Kernen versetzten Duromer-Matrix Additionspolymere verwendet. Dabei wird bevorzugt eine Mischung eines trimeren Isocyanatmonomers, bevorzugt das Isocyanurat-Trimer von Isophorondiisocyanat, und verschiedenen Mono-, Di- oder Triaminen in einem Industriekneter auf 150°C bis 250°C, bevorzugt 180°C, erhitzt und dabei bis zum Erhärten geknetet.

Gemäß einer weiteren bevorzugten Ausführungsform wird für das Erzeugen der mit den Thermoplast-Kernen versetzten Duromer-Matrix eine Mischung eines trimeren Isocyanatmonomers, bevorzugt das Isocyanurat-Trimer von Isophorondiisocyanat, und verschiedenen Mono-, Di- oder Triaminen mit einem ansteigenden Temperaturprofil in einem Schnecken-Extruder bei Temperaturen in einem Bereich von 5°C bis 250°C extrudiert.

Nach Beendigung des Extrusionsprozesses oder Knetprozesses wird das erhaltene, die Merkmalsstoffe enthaltende Harzpulver auf die der jeweiligen Anwendung entsprechende Korngröße zermahlen. Für den Einsatz in Intaglio-Stahlstichtiefdruck-Anwendungen besitzen die Pigmente eine Korngröße (d99) < 6µm.

Die Pigmente besitzen eine Korngröße (d99) von weniger als 6 µm.

Als Merkmalsstoffe eignen sich vor allem organische oder metallorganische Moleküle, die in unpolaren organischen Lösemitteln gelöst werden können. Die Einbringung von anorganischen Pigmentpartikeln oder Quantendots etc. ist technisch schwierig (u.a. kein Auflösen im Kern-Polymer, ggf. Agglomeration), und bietet nicht alle erfindungsgemäßen Vorteile, wie etwa die erhöhte Leuchtkraft pro eingesetzter Leuchtstoffmenge, und wird daher nicht bevorzugt.

Gemäß einer bevorzugten Ausführungsform handelt es sich bei dem Merkmalsstoff um einen Lumineszenzfarbstoff. Gemäß einer bevorzugten Ausführungsform handelt es sich bei dem Lumineszenzfarbstoff um einen Fluoreszenzfarbstoff. Gemäß einer weiteren bevorzugten Ausführungsform handelt es sich bei dem Lumineszenzfarbstoff um einen Phosphoreszenzfarbstoff. Gemäß einer weiteren bevorzugten Ausführungsform handelt es sich bei dem Lumineszenzfarbstoff um einen im UV-Bereich anregbaren Lumineszenzfarbstoff, welcher im sichtbaren Spektralbereich emittiert. Gemäß einer weiteren bevorzugten Ausführungsform handelt es sich um einen im sichtbaren Spektralbereich anregbaren Lumineszenzfarbstoff, welcher im sichtbaren Spektralbereich emittiert. Gemäß einer weiteren bevorzugten Ausführungsform handelt es sich um einen im Infrarot-Bereich emittierenden Lumineszenzfarbstoff. Bei den Farbstoffen kann es sich sowohl um rein organische Moleküle, als auch um metallorganische Komplexe handeln.

Gemäß einer bevorzugten Ausführungsform werden zwei oder mehr fluoreszierende oder phosphoreszierende Lumineszenzfarbstoffe gemischt, um ein Energietransfersystem bzw. FRET-System zu erstellen, in welchem der erste Lumineszenzfarbstoff nach Anregung seine Anregungsenergie partiell oder vollständig an den zweiten Lumineszenzfarbstoff abgeben kann. Im Falle eines derartigen FRET-Systems ist einer der beteiligten Lumineszenzfarbstoffe bevorzugt im UV-Bereich anregbar und emittiert im sichtbaren Spektralbereich, während der andere Lumineszenzfarbstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzfarbstoffen, welche im sichtbaren Spektralbereich emittieren, sind rein organische Lumineszenzfarbstoffe und lumineszierende Metallkomplexe. Mögliche Farbstoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzfarbstoffklassen sind ebenfalls einsetzbar.

Insbesondere werden als Farbstoffklasse für im sichtbaren Spektralbereich anregbare Lumineszenzfarbstoffe welche im Sichtbaren emittieren aufgrund ihrer hohen Lichtstabilität bevorzugt Perylenfarbstoffe eingesetzt.

Beispiele für geeignete im Infrarot emittierende Lumineszenzfarbstoffe sind organische Fluoreszenzfarbstoffe oder lumineszierende Metallkomplexe wie IR-1048, Cy7 oder Nd(TTA)3 (Neodym-tris-thenoyltrifluoroacetonat).

Beispiele für FRET-Systeme sind z.B. Mischungen aus einem grün-gelb anregbaren Fluoreszenzfarbstoff und einem grün-gelb emittierenden Fluoreszenzfarbstoff, beispielsweise eine Mischung mit einem Gewichtsverhältnis von 1:15 aus 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄, ein grün anregbarer Perylenfarbstoff welcher eine orange Lumineszenzemission besitzt, im weiteren "F-Orange" genannt) und N-(2-(4-oxo-4H-benzo[d][1,3]oxazin-2-yl)phenyl)naphthalen-2-sulfonamid (C₂₄H₁₆N₂O₄S, ein UV-anregbarer Lumineszenzfarbstoff welcher eine grüne Lumineszenzemission besitzt, im weiteren "F-Grün" genannt).

Ein FRET-System kann auch dazu dienen, eine forensische Komponente in einem Lumineszenzpigment auszulesen. So kann der Akzeptor-Farbstoff nicht nur durch einen Energietransfer des Donorfarbstoffes angeregt werden, sondern auch eine direkte Anregung des Akzeptorfarbstoffes kann zu dessen Lumineszenz führen. Beispielsweise kann eine Mischung aus F-Orange und F-Grün einerseits im UV-A-Bereich, z.B. bei 365 nm, angeregt werden (Anregung des F-Grün gefolgt von Energieübertrag auf F-Orange). Andererseits kann für einen forensischen Test auch das F-Orange direkt angeregt werden, beispielsweise durch Licht der Wellenlänge 525 nm. Die direkte Anregung des Akzeptorstoffes kann somit verwendet werden, um FRET-Systeme von anderen Farbstoffsystemen zu unterscheiden, und bietet eine zusätzliche Sicherheitsstufe, die z.B. in einem Labor oder automatisch von Sensoren ausgewertet werden kann.

Gemäß einer bevorzugten Ausführungsform enthält das Lumineszenzpigment daher ein Energietransfersystem (FRET-System), bevorzugt ein FRET-System aus einem UV-anregbaren Lumineszenzfarbstoff als Donor und einem im sichtbaren Bereich anregbaren Lumineszenzfarbstoff als Akzeptor. Bevorzugt handelt es sich bei dem Akzeptor um einen Perylenfarbstoff. Bevorzugt wird der Akzeptor als forensischer Marker verwendet.

Bevorzugt handelt es sich bei dem Merkmalsstoff um einen Infrarotabsorber. Besonders bevorzugt weist der Infrarotabsorber im sichtbaren Spektralbereich keine oder nur eine geringe Absorption auf. Gemäß einer bevorzugten Ausführungsform sind die Absorber schmalbandig (z.B. mit einem FWHM (Halbwertsbreite, "full width at half maximum") von weniger als 200 nm) oder scharfbandig (z.B. mit einem FWHM von weniger als 30 nm) und absorbieren damit in einem engen Spektralbereich. Gemäß einer weiteren bevorzugten Ausführungsform absorbieren die Absorber breitbandig (z.B. mit einem FWHM von mehr als 200 nm). Gemäß einer bevorzugten Ausführungsform liegt das Absorptionsmaximum des Infrarotabsorbers im Bereich von 700 nm bis 900 nm, bevorzugt in einem Bereich von 700 nm bis 800 nm, und ist damit geeignet, um über Standard-Infrarotsensoren für Banknoten ausgelesen zu werden. Gemäß einer weiteren bevorzugten Ausführungsform liegt das Absorptionsmaximum des Infrarotabsorbers oberhalb von 900 nm, weiter bevorzugt oberhalb von 950 nm, insbesondere bevorzugt im Bereich von 1000 nm bis 1100 nm, und wird dadurch von Standard-Infrarotsensoren für Banknoten nicht erfasst, kann jedoch durch spezielle Infrarotsensoren für Banknoten erfasst werden. Gemäß einer bevorzugten Ausführungsform liegt das Absorptionsmaximum oder eine starke Absorptionsbande des UV-Absorbers im UV-A-Bereich von 315 nm bis 380 nm, insbesondere bevorzugt im Bereich von 350 nm bis 380 nm. Gemäß einer weiteren bevorzugten Ausführungsform liegt das Absorptionsmaximum oder eine starke Absorptionsbande des UV-Absorbers im UV-B/C-Bereich von 200 nm bis 315 nm, weiter bevorzugt von 220 nm bis 290 nm, insbesondere bevorzugt von 240 nm bis 270 nm.

Geeignete Infrarotabsorber sind beispielsweise kommerziell bei der Firma Fujifilm Imaging Colorants (z.B. CKK-55), der Firma BASF (z.B. Lumogen IR-Absorber) oder der Firma Epolin unter dem Markennamen Epolight erhältlich. Beispielsweise absorbiert Epolight 4101 schmalbandig bei 739 nm und zeigt bei verdünnter Einbringung in ein Polymer keine merkliche Eigenfarbe. Ebenso absorbiert beispielsweise Epolight 4831 schmalbandig bei 1000 nm und zeigt bei verdünnter Einbringung in ein Polymer keine merkliche Eigenfarbe.

Geeignete UV-Absorber sind beispielsweise bei der Firma BASF unter den Markennamen Tinuvin und Chimassorb erhältlich. Beispielsweise besitzt Tinuvin 326 eine starke Absorptionsbande bei 360 nm und Chimassorb 81 eine starke Absorptionsbande bei 330 nm.

Gemäß einer bevorzugten Ausführungsform handelt es sich bei dem Merkmalsstoff um einen schaltbaren Farbstoff. Bevorzugt handelt es sich um einen thermochromen oder photochromen Farbstoff. Gemäß einer bevorzugten Ausführungsform handelt es sich bei dem schaltbaren Farbstoff um eine photochrome Verbindung. Bevorzugt handelt es sich um eine photochrome Verbindung, die zwischen einem ersten sichtbaren Zustand und einem zweiten sichtbaren oder unsichtbaren Zustand schaltbar ist. Bevorzugt wird der Schaltvorgang in eine Richtung durch Bestrahlung mit UV-Licht durchgeführt, während das Rückschalten entweder von alleine (thermisch) oder durch Bestrahlung mit sichtbarem Licht erfolgt.

Gemäß einer bevorzugten Ausführungsform sind die photochromen Farbstoffe ebenfalls Lumineszenzfarbstoffe. Dabei können beide oder nur einer der Schaltungszustände des Farbstoffs zur Lumineszenz fähig sein. Die verschiedenen Schaltungszustände können identische Lumineszenzeigenschaften besitzen (z.B. Emission bei der gleichen Wellenlänge) oder verschiedene Lumineszenzeigenschaften besitzen (z.B. Wechsel der Emissionswellenlänge nach Schaltvorgang).

Gemäß einer bevorzugten Ausführungsform befindet sich die durch den Schaltvorgang erzeugte Absorptionsbande oder Emissionsbande, insbesondere die erzeugte Absorptionsbande, im sichtbaren Spektralbereich. Gemäß einer weiteren bevorzugten Ausführungsform befindet sich die durch den Schaltvorgang erzeugte Absorptionsbande oder Emissionsbande im Infrarotbereich, z.B. in einem Bereich von 700 nm bis 900 nm.

Beispiele für geeignete thermochrome Farbstoffe sind beispielsweise (a) organische Moleküle, welche bei Wechsel der Temperatur durch Strukturänderung ihre Farbe ändern, wie 9,9'-Bixanthyliden und 10,10'-Bianthronyliden; (b) Kombinationen aus einem Leucofarbstoff (z.B. Spirolactone, Spiropyrane) und einem reversiblen Protonendonor (z.B. Bisphenol A, 1,2,3-Triazole) und einem Phasenwechselmaterial (z.B. Paraffin), welche bei Wechsel der Temperatur durch Protonierung/Deprotonierung des Leucofarbstoffs die Farbe wechseln; (c) Farbstoffe oder Metallkomplexe, welche ihre Farbintensität temperaturabhängig verändern, z.B. Temperatur-Quenching bei Europiumkomplexen; und (d) Kombinationen aus mehreren Farbstoffen mit unterschiedlichem Temperaturverhalten (z.B. einer Mischung aus Terbium- und Europiumkomplexen, wie sie u.a. in der Schrift EP 0256922 B1 beschrieben wird, welche temperaturabhängig rot oder grün lumineszieren kann).

Hierbei sind (a) und (d) aufgrund des klaren Farbwechsels bevorzugt und (b) aufgrund der Komplexität und schwierigen Umsetzung weniger bevorzugt.

Beispiele für geeignete photochrome Farbstoffe sind beispielsweise Spiropyrane, Stilbene/Azastilbene, Triarylmethane, Nitrone, Fulgide, Naphthopyrane, Spirooxazine, Quinone und Diarylethene. Aufgrund ihrer hohen Lichtstabilität sind Diarylethene bevorzugt. Beispielsweise absorbiert das Diarylethen BTF6 (=1,2-bis(2-methyl-1-benzothiophen-3-yl)perfluorocyclopenten) in der offenen Ringstruktur im UV-Bereich bei 200 nm bis 300 nm und besitzt keine merklichen Absortionsbanden im sichtbaren Spektralbereich, ist also farblos. Nach Bestrahlung mit UV-Licht der Wellenlänge 254 nm wandelt es sich jedoch in die geschlossene Ringstruktur um, welche eine Absorptionsbande im sichtbaren Spektralbereich bei 530 nm aufweist, also farbig ist. Bei Anregung mit UV-Licht der Wellenlänge 315 nm emittieren sowohl die geschlossene, als auch die offene Ringstruktur bei 450 nm, es handelt sich also gleichzeitig um einen Lumineszenzfarbstoff.

Durch Abwarten (thermisch) oder Bestrahlung mit sichtbarem Licht, z.B. Licht der Wellenlänge 400 nm, lässt sich die geschlossene Ringstruktur wieder in die offene Ringstruktur zurückführen.

Weiterhin ist es möglich, durch gezielte Kombination (bzw. gemeinsame Verkapselung) unterschiedlicher Merkmalstoffe komplexere Codierungen zu erzeugen und Merkmalspartikel zu erzeugen, die für unterschiedliche maschinenlesbare Nachweisverfahren gleichzeitig geeignet sind.

Zusätzlich zum Merkmalsstoff können den Polymerpartikeln weitere Additive zugesetzt werden.

Gemäß einer bevorzugten Ausführungsform werden den Polymerpartikeln sogenannte Weichmacher zugesetzt, beispielsweise Diethylhexyladipat, Dibutylphthalat oder Diisononylphthalat. Als Stoffklassen können hier Di-ester der Phtalsäure, Di-ester der Adipinsäure und Di-ester der Sebacinsäure mit längerkettigen Monoalkoholen (2-Ethylhexanol, Isononanol, Decylalkohol, Fettalkohole, Benzylalkohol, Glykolether), Tri-ester der Citronensäure, Phosphorsäureester längerkettiger aliphatischer Alkohole, Dibenzoesäureester von aliphatischen Alkoholen, Ester von Fettsäuren mit aliphatischen Alkoholen, Di-ester von Polyethylenglykolethern, Ester von Harzsäuren mit längerkettigen aliphatischen Alkoholen, Weichmacher auf Basis epoxidierter Fettsäureester oder epoxidierter Öle, Kohlenstoffweichmacher und chlorierte Paraffine eingesetzt werden. Hierdurch können die mechanischen Eigenschaften des Polymers angepasst werden. Insbesondere kann die Aufnahmefähigkeit des Kernmaterials für bestimmte Merkmalsstoffe erhöht werden.

Bevorzugt werden relativ zur Masse des Kernmaterials 0,1 bis 5 Gewichtsprozent Weichmacher zugesetzt, weiter bevorzugt 0,2 bis 2%, insbesondere bevorzugt 0,3 bis 0,6%.

Gemäß einer weiteren bevorzugten Ausführungsform werden dem Kernmaterial UV-Absorber zugesetzt. Hierdurch kann z.B. Lichtechtheit des Merkmalstoffes verbessert werden. Die zugefügten UV-Absorber absorbieren bevorzugt in einem Wellenlängenbereich von 200 nm bis 350 nm. Geeignete UV-Absorber sind beispielsweise bei der Firma BASF unter dem Markennamen Tinuvin und Chimassorb erhältlich, beispielsweise Chimassorb 81.

Gemäß einer weiteren bevorzugten Ausführungsform werden dem Kernmaterial Farbstoffe zugefügt. Hierdurch kann z.B. die Eigenfärbung der Kapseln angepasst werden (z.B. rot oder blau). Ebenso können Farbstoffe verwendet werden, um Anregungs- oder Emissionsspektren der Merkmalstoffe zu modulieren.

Die Polymerpartikel, welche in das Harz kondensiert werden, müssen nicht zwangsläufig kugelförmig sein. Im Hinblick auf das mit dem lumineszierenden organischen Farbstoff versetzte Polymergebilde können auch plättchenförmige oder undefinierte Partikelformen verwendet werden.

Gemäß einer bevorzugten Ausführung werden die Farbstoffe in einer Polymermasse extrudiert und anschließend zu der gewünschten Korngröße, bevorzugt in einem Bereich von 0,05 µm bis 100 µm, vermahlen.

Gemäß der vorliegenden Erfindung werden Thermoplast-Kerne, in denen Merkmalstoffe (z.B. Fluoreszenzstoffe, metallorganische oder organische IR- oder UV-Absorber, photochrome Stoffe), insbesondere Lumineszenzstoffe, gelöst vorliegen, in eine Duromer-Matrix eingebaut. Auf diese Weise werden u.a. die folgenden Vorteile erzielt:
- Stabilisierung der Lumineszenzstoffe gegenüber wässrigen Säuren und Laugen durch den Thermoplast (z.B. PMMA);
- daher ist für die Säure-/Laugestabilisierung keine geschlossene äußere Schale erforderlich;
- Mahlbarkeit und damit einfachere und billigere Skalierbarbeit des Herstellungsprozesses hin zum großtechnischen Maßstab;
- durch die physikalische Lösung der Fluoreszenzstoffe im Thermoplast wird eine höhere Leuchteffizienz erzielt; auf diese Weise ergeben sich ein reduzierter Materialeinsatz und niedrigere Kosten;
- die Modifizierung der Oberfläche durch die polare Duromermatrix führt zu einer verbesserten Einbringung in Druckfarben.

Die Sicherheitspigmente werden bevorzugt für die Herstellung von Wertdokumenten verwendet. Dies geschieht bevorzugt in Form einer Druckfarbe, insbesondere für Offsetdruck, Siebdruck oder Stahlstichtiefdruck. Anstatt die Pigmente direkt in den Drucklack bzw. die Druckfarbe einzuarbeiten kann aus den Pigmenten auch zuerst ein Farbkonzentrat hergestellt werden. Diese hat z.B. einem Pigmentanteil von 50% und kann später in den Drucklack bzw. die Druckfarbe eingearbeitet werden. Dies hat anwendungstechnische Vorteile wie z.B. eine schnellere Einarbeitung oder das Vermeiden von Stauben bei der Einarbeitung.

Alternativ können die Sicherheitspigmente auch in eine Polymermasse eingearbeitet werden, bevorzugt um ein Masterbatch zu erzeugen, oder um ein Wertdokument-Substrat, eine Sicherheitsfolie, eine Melierfaser oder einen Sicherheitsfaden herzustellen. Dies kann beispielsweise durch Extrusion erfolgen.

Die Erfindung wird nachstehend anhand von Beispielen näher beschrieben. Die Beispiele fallen nicht unter den Schutzumfang der beiliegenden Ansprüche, dienen aber dem Verständnis der Erfindung.

### Beispiel 1: Grünes Fluoreszenzpigment

50 g PMMA-Kugeln mit einem durchschnittlichen Molgewicht von 100000 g/mol werden mit 5 g N-(2-(4-oxo-4H-benzo[d][1,3]oxazin-2-yl)phenyl) naphthalen-2-sulfonamid (C₂₄H₁₆N₂O₄S) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft. Die verbleibende wässrige Phase enthält nach Entfernen des Dichlormethans ca. 55 g Kugeln aus PMMA mit einer mittleren Partikelgröße von ca. 2 µm, welche gelösten Farbstoff 1 enthalten (im Folgenden "PMMA 1" genannt). Mit einer Ultrazentrifuge werden die Partikel dreimal mit je 1 Liter Wasser gewaschen und bei 60°C anschließend getrocknet.

In einem Laborkneter werden die Komponenten
79.63 g des Isocyanurat-Trimeren von Isophorondiisocyanat
22.46 g Benzamid
2.00 g Harnstoff
14.12 g Melamin
10 g PMMA 1
bei 180°C bis zum Erstarren geknetet. Das erhaltene Granulat wird auf eine Korngröße (d99) von 11 µm gemahlen. Es ergibt sich ein Massenanteil des Farbstoffes im Pigment von 0.72%.

Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt. Es wird ein bei 365nm-Anregungslicht grün fluoreszierender Andruck erhalten.

Der Andruck zeigt eine hohe Stabilität gegen organische Lösemittel sowie wässrige Säuren und Basen, während Andrucke des reinen Farbstoffs nicht beständig sind.

### Beispiel 2: Rotes Fluoreszenzpigment

50 g PMMA-Kugeln mit einem durchschnittlichen Molgewicht von 100000 g/mol werden mit 3 g Eu(TTA)₃(TPPO)₂ (TTA = Thenoyltrifluoroaceton; TPPO = Triphenylphosphinoxid) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 Minuten dispergiert. Anschließend wird das Dichlormethan unter Rühren bei 500 mbar verdampft. Die verbleibende wässrige Phase enthält nach Entfernen des Dichlormethans ca. 53 g Kugeln aus PMMA mit einer mittleren Partikelgröße von ca. 2 µm, welche gelösten Farbstoff 2 enthalten (im Folgenden "PMMA 2" genannt). Mit einer Ultrazentrifuge werden die Partikel dreimal mit je 1 Liter Wasser gewaschen und bei 60°C anschließend getrocknet.

In einem Laborkneter werden die Komponenten
79.63 g des Isocyanurat-Trimeren von Isophorondiisocyanat
31.72 g p-Toluolsulfonamid
2.00 g Harnstoff
14.12 g Melamin
10 g PMMA 2
bei 180°C bis zum Erstarren geknetet. Das erhaltene Granulat wird auf eine Korngröße (d99) von 11 µm gemahlen. Das erhaltene Pigment wird mit einer Konzentration von 15% in einen Offsetlack (hubergroup Deutschland GmbH) mit einem Dreiwalzenstuhl eingebracht und mit einem Andruckgewicht von 2 g/m² im Offsetdruck angedruckt. Es wird ein bei 365nm-Anregungslicht rot fluoreszierender Andruck erhalten.

Der Andruck zeigt eine hohe Stabilität gegen organische Lösemittel sowie wässrige Säuren und Basen, während Andrucke des reinen Farbstoffs nicht beständig sind.

### Beispiel 3 (Vergleichsbeispiel)

In einem Laborkneter werden die Komponenten
79.63 g des Isocyanurat-Trimeren von Isophorondiisocyanat
31.72 g *p*-Toluolsulfonamid
2.00 g Harnstoff
14.12 g Melamin
9 g N-(2-(4-oxo-4H-benzo[d] [1,3]oxazin-2-yl)phenyl)naphthalen-2-sulfonamid (C₂₄H₁₆N₂O₄S)
bei 180°C bis zum Erstarren geknetet. Das erhaltene Granulat wird auf eine Korngröße von d99: 11 µm gemahlen. Es ergibt sich ein Massenanteil von Farbstoff im Pigment von 6.6 %.

Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt.

### Beispiel 4: Gelbes Fluoreszenzpigment

50 g PMMA-Kugeln mit einem durchschnittlichen Molgewicht von 120000 g/mol werden mit 3 g N-(2-(4-oxo-4H-benzo[d][1,3]oxazin-2-yl)phenyl)naphthalen-2-sulfonamid (C₂₄H₁₆N₂O₄S) (= Farbstoff 1) und 2 g Eu(TTA)₃(TPPO)₂ (TTA = Thenoyltrifluoroaceton; TPPO= Triphenylphosphinoxid) (=Farbstoff 2) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft. Die verbleibende wässrige Phase enthält nach Entfernen des Dichlormethans ca. 55 g Kugeln aus PMMA mit einer mittleren Partikelgröße von ca. 2 µm, welche gelösten Farbstoff 1 und Farbstoff 2 enthalten (im Folgenden "PMMA 1-2" genannt). Mit einer Ultrazentrifuge werden die Partikel dreimal mit je 1 Liter Wasser gewaschen und bei 60°C anschließend getrocknet.

In einem Laborkneter werden die Komponenten
71.8 g Isophorondiisocyanat
34.8 g p-Toluolsulfonamid
20.09 g Melamin
10 g PMMA 1-2
bei 180°C bis zum Erstarren geknetet. Das erhaltene Granulat wird auf eine Korngröße (d99) von 11 µm gemahlen. Das erhaltene Pigment wird mit einer Konzentration von 15% in eine wasserbasierte Siebdruckfarbe (Pröll KG) mit einem Dreiwalzenstuhl eingebracht und mit einem Andruckgewicht von 6 g/m² im Siebdruck angedruckt. Es wird ein durch Anregung mit 365 nm gelb fluoreszierender Andruck erhalten.

Der Andruck zeigt eine hohe Stabilität gegen organische Lösemittel sowie wässrige Säuren und Basen, während Andrucke des reinen Farbstoffs nicht beständig sind.

### Beispiel 5: Gelbes Fluoreszenzpigment

25 g PMMA-Kugeln mit einem durchschnittlichen Molgewicht von 80000 g/mol werden mit 2 g N-(2-(4-oxo-4H-benzo[d][1,3]oxazin-2-yl)phenyl)naphthalen-2-sulfonamid (C₂₄H₁₆N₂O₄S) (= Farbstoff 1) in 0.5 Liter Dichlormethan gelöst. Die Mischung wird in einen Reaktor mit 2.5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft.

In einem zweiten Reaktor werden 25 g PMMA-Kugeln mit einem durchschnittlichen Molgewicht von 100000 g/mol mit 2 g Eu(TTA)₃(TPPO)₂ (TTA = Thenoyltrifluoroaceton; TPPO = Triphenylphosphinoxid) (=Farbstoff 2) in 0.5 Liter Dichlormethan gelöst. Die Mischung wird in einen Reaktor mit 2.5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft.

Die verbleibenden wässrigen Phasen enthalten nach Entfernen des Dichlormethans je ca. 25 g Kugeln aus PMMA mit einer mittleren Partikelgröße von ca. 2 µm, welche gelösten Farbstoff 1 oder den gelösten Farbstoff 2 enthalten (im Folgenden "PMMA 1b" und "PMMA 2b" genannt). Mit einer Ultrazentrifuge werden die Partikel dreimal mit je 1 Liter Wasser gewaschen und bei 60°C anschließend getrocknet.

In einem Laborkneter werden die Komponenten
71.8 g Isophorondiisocyanat
22.46 g Benzamid
20.09 g Melamin
5 g PMMA 1b
5 g PMMA 2b
bei 180°C bis zum Erstarren geknetet. Das erhaltene Granulat wird auf eine Korngröße (d99) von 11 µm gemahlen. Das erhaltene Pigment wird mit einer Konzentration von 15% eine wasserbasierte Siebdruckfarbe (Pröll KG) mit einem Dreiwalzenstuhl eingebracht und mit einem Andruckgewicht von 6 g/m² im Siebdruck angedruckt. Es wird ein durch Anregung mit 365 nm gelb fluoreszierender Andruck erhalten.

Der Andruck zeigt eine hohe Stabilität gegen organische Lösemittel sowie wässrige Säuren und Basen, während Andrucke des reinen Farbstoffs nicht beständig sind.

### Beispiel 6: Intensitäts- und Stabilitätsmessungen der Beispiele 1 und 3 (Vergleichsbeispiel)

Die Intensitätsmessungen werden an den hergestellten Andrucken unter einer definierten Messgeometrie aufgenommen. Hierfür wurde als Messgerät das Fluoreszenzspektrometer Perkin-Elmer LS50B verwendet.

| Probe | Massenanteil Farbstoff im Pigment | Lumineszenzintensität am Emissionsmaximum 527 nm [counts] |
|---|---|---|
| Andruck aus Beispiel 1 | 0.72 % | 398 |
| Andruck aus Beispiel 3 | 6% | 392 |

Im Vergleichsbeispiel 3 ist die über 8-fache Menge an Farbstoff verwendet worden. Die erhaltene Intensität der Lumineszenz ist jedoch nicht höher als in Beispiel 1.

Die Basenstabilität wird durch 10-minütiges Einlegen des Andrucks aus Beispiel 1 und des Andrucks aus dem Vergleichsbeispiel 3 in 1-molare Natronlauge getestet. Die anschließende Intensitätsmessung wird wieder unter einer definierten Messgeometrie durchgeführt. Hierfür wurde auch das Messgerät Perkin-Elmer LS50B verwendet.

| **Probe** | **Restintensität nach Basenstabilitätstest** |
|---|---|
| Beispiel 1 | 78 % |
| Vergleichsbeispiel 3 | 12 % |

### Beispiel 7: IR-absorbierendes Pigment

25 g PMMA-Kugeln mit einem durchschnittlichen Molgewicht von 80000 g/mol werden mit 1 g des IR-Absorbers CKK-55 (Fujifilm Imaging Colorants) und 0.25 g Dibutylphtalat in 0.5 Liter Dichlormethan gelöst. Die Mischung wird in einen Reaktor mit 2.5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft.

Die verbleibende wässrige Phase enthält nach Entfernen des Dichlormethans ca. 26 g Kugeln aus PMMA mit einer mittleren Partikelgröße von ca. 2 µm, welche gelösten IR-Absorber CKK-55 enthalten (im Folgenden "PMMA CKK-55" genannt). Mit einer Ultrazentrifuge werden die Partikel dreimal mit je 1 Liter Wasser gewaschen und bei 60°C anschließend getrocknet.

In einem Laborkneter werden die Komponenten
71.8 g Isophorondiisocyanat
22.7 g Benzamid
20.09 g Melamin
10 g PMMA CKK-55
bei 180°C bis zum Erstarren geknetet. Das erhaltene Granulat wird auf eine Korngröße (d99) von 11 µm gemahlen. Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt. Der Andruck zeigt eine Absorptionsbande im NIR-Bereich bei 850 nm.

Der Andruck zeigt eine hohe Stabilität gegen organische Lösemittel sowie wässrige Säuren und Basen, während Andrucke des reinen Absorbers nicht beständig sind.

### Beispiel 8: Photochromes Pigment

50 g PMMA-Kugeln mit einem durchschnittlichen Molgewicht von 110000 g/mol werden mit 1.65 g Cis-1,2-dicyano-1,2-bis(2,4,5-trimethyl-3-thienyl)ethen (C₁₈H₁₈N₂S₂) in 1 Liter Dichlormethan gelöst. Die Mischung wird in einen Reaktor mit 5 Liter einer wässrigen Lösung von 1.5% Natriumdodecylsulfat gegeben und mit einem Homogenisator für 5 min dispergiert. Anschließend wird das Dichlormethan unter Rühren bei 750 mbar verdampft. Die verbleibende wässrige Phase enthält nach Entfernen des Dichlormethans ca. 51 g Kugeln aus PMMA mit einer mittleren Partikelgröße von ca. 2 µm, welche den gelösten photochromen Farbstoff enthalten (im Folgenden "PMMA DBP" genannt). Mit einer Ultrazentrifuge werden die Partikel dreimal mit je 1 Liter Wasser gewaschen und bei 60°C anschließend getrocknet.

In einem Laborkneter werden die Komponenten
73.1 g Isophorondiisocyanat
20.47 g Benzamid
21.29 g Melamin
8.5 g PMMA DBP
bei 140°C bis zum Erstarren geknetet. Das erhaltene Granulat wird auf eine Korngröße (d99) von 11 µm gemahlen. Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt. Es wird ein farbloser Andruck erhalten, welcher bei Bestrahlung mit 330 nm einen rötlichen Farbeindruck zeigt. Dieser Farbeindruck verschwindet entweder durch leichtes Erwärmen oder bei Bestrahlung mit sichtbarem Licht (z.B. der Wellenlänge 520 nm).

Der Andruck zeigt eine hohe Stabilität gegen organische Lösemittel sowie wässrige Säuren und Basen, während Andrucke des reinen Farbstoffs nicht beständig sind.

### Beispiel 9: Pigment mit UV-Absorber und Eigenfarbe

50 g PMMA-Kugeln mit einem durchschnittlichen Molgewicht von 100000 g/mol werden mit 1.5 g des blauen Farbstoffs "Sudanblau II" (1,4-Bis-(butylamino)-antrachinon, C₂₂H₂₆N₂O₂) und 1g des UV-Absorbers 2-Hydroxy-4-(octyloxy)benzophenon (CH₃(CH₂)₇OC₆H₃(OH)COC₆H₅) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 750 mbar verdampft. Die verbleibende wässrige Phase enthält nach Entfernen des Dichlormethans ca. 51 g Kugeln aus PMMA mit einer mittleren Partikelgröße von ca. 2 µm, welche den gelösten blauen Farbstoff und UV-Absorber enthalten (im Folgenden "PMMA SBUV" genannt). Mit einer Ultrazentrifuge werden die Partikel dreimal mit je 1 Liter Wasser gewaschen und bei 60°C anschließend getrocknet.

In einem Laborkneter werden die Komponenten
73.1 g Isophorondiisocyanat
20.47 g Benzamid
21.29 g Melamin
8.5 g PMMA SBUV
bei 140°C bis zum Erstarren geknetet. Das erhaltene Granulat wird auf eine Korngröße (d99) von 11 µm gemahlen. Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt. Es wird ein Andruck erhalten, welcher blau gefärbt ist und zusätzlich eine Absorptionsbande im Bereich 280-350 nm besitzt.

Der Andruck zeigt eine hohe Stabilität gegen organische Lösemittel sowie wässrige Säuren und Basen, während Andrucke des reinen Absorbers nicht beständig sind.

## Patentansprüche

1. Sicherheitspigment für die Herstellung von Wertdokumenten, umfassend eine ein Additionspolymer umfassende Duromer-Matrix sowie eine Mehrzahl von darin eingebetteten Kernpartikeln aus einem thermoplastischen Polymer mit einem in den Kernpartikeln gelösten Merkmalstoff, wobei die thermoplastischen Kernpartikel in der Duromer-Matrix in einer Konzentration zwischen 0.1 und 25 Gewichtsprozent vorliegen, wobei der Merkmalstoff ein organischer oder ein metallorganischer Stoff ist und das Sicherheitspigment eine Korngröße d99 von weniger als 6 µm besitzt.

2. Sicherheitspigment nach Anspruch 1, wobei der Merkmalstoff ein fluoreszierender oder phosphoreszierender oder photochromer oder thermochromer Merkmalstoff oder ein UV- oder IR- oder VIS-Absorptionsfarbstoff ist.

3. Sicherheitspigment nach Anspruch 1 oder 2, wobei der fluoreszierende oder phosphoreszierende Merkmalstoff im UV-Spektralbereich anregbar ist und im sichtbaren Spektralbereich emittiert.

4. Sicherheitspigment nach einem der Ansprüche 1 bis 3; wobei der fluoreszierende oder phosphoreszierende Merkmalstoff im UV- oder im sichtbaren Spektralbereich anregbar ist und im IR-Spektralbereich emittiert.

5. Sicherheitspigment nach einem der Ansprüche 1 bis 4, wobei in den Kernpartikeln zwei unterschiedliche lumineszierende Farbstoffe in gelöster Form vorliegen, die ein Energietransfersystem bilden, bei dem der erste Farbstoff nach Anregung seine Anregungsenergie partiell oder vollständig an den zweiten Farbstoff transferiert.

6. Sicherheitspigment nach einem der Ansprüche 1 bis 5, wobei das thermoplastische Polymer ausgewählt ist aus Polystyrol (PS), Polyacrylaten, Polyethylen (PE), Polypropylen (PP), Polycarbonaten (PC), Polyamiden (PA), Polyurethanen (PU), Polyharnstoffen (PH), Polyethylenterephthalat (PET) oder anderen Polyestern, bevorzugt aus Polystyrol (PS) oder aus einem der Polyacrylate Polymethylmethacrylat (PMMA), Polyvinylacetat (PVAC), Polyvinylchlorid (PVC), Polyacrylnitril (PAN), besonders bevorzugt aus Polystyrol (PS) oder Polymethylmethacrylat (PMMA).

7. Sicherheitspigment nach einem der Ansprüche 1 bis 6, wobei die Kettenlängen des thermoplastischen Polymers im Bereich 1 000 bis 1 000 000 g/mol, insbesondere bei 50 000 bis 250 000 g/mol, liegen.

8. Sicherheitspigment nach einem der Ansprüche 1 bis 7, wobei die Duromer-Matrix ein Additionspolymer umfasst, nämlich eine Mischung aus verschiedenen Mono-, Di- oder Triaminen und einem trimeren Isocyanatmonomer, bevorzugt den Isocyanurat-Trimeren von Isophorondiisocyanat.

9. Sicherheitspigment nach einem der Ansprüche 1 bis 8, wobei die thermoplastischen Kernpartikel in der Duromer-Matrix in einer Konzentration zwischen 3 bis 20 Gewichtsprozent vorliegen.

10. Verfahren zum Herstellen eines Sicherheitspigments für die Herstellung von Wertdokumenten nach Anspruch 1, aufweisend die Schritte:
a) den Schritt des Lösens eines organischen oder metallorganischen Merkmalstoffes in einem thermoplastischen Polymer, um auf diese Weise Thermoplast-Partikel mit darin gelöstem Merkmalstoff bereitzustellen;
b) den Schritt des Einbringens der im Schritt a) erhaltenen Thermoplast-Partikel mit darin gelöstem Merkmalstoff in eine Duromer-Matrix;
c) den Schritt des Vermahlens des im Schritt b) erhaltenen Erzeugnisses zu Sicherheitspigmenten, d.h. die Vermahlung der Pigmentpartikel auf eine Korngröße d99 kleiner als 6µm.

11. Verfahren nach Anspruch 10, wobei Schritt a) folgende Teilschritte umfasst:
a1) Lösen des thermoplastischen Polymers sowie des organischen oder
metallorganischen Merkmalstoffs in einem organischen Lösungsmittel;
a2) Dispergieren der Lösung von Schritt a1) in einem wässrigen Medium unter Verwendung eines Tensids;
a3) Entfernen des organischen Lösemittels;
a4) Isolieren der Kernpartikel;
wobei im Schritt b) die Einbettung der Kernpartikel bevorzugt durch einen Knet- oder Extrusionsprozess der Kernpartikel zusammen mit den Monomeren des Additionspolymers erfolgt

12. Farbkonzentrat, umfassend Sicherheitspigmente nach einem der Ansprüche 1 bis 9, insbesondere mit einer Konzentration der Sicherheitspigmente von mehr als 40 Gewichtsprozent.

13. Druckfarbe für Offsetdruck, Siebdruck oder Stahlstichtiefdruck umfassend Sicherheitspigmente nach einem der Ansprüche 1 bis 9, bevorzugt mit einer Konzentration der Sicherheitspigmente von 1 bis 40 Gewichtsprozent, besonders bevorzugt 1 bis 20 Gewichtsprozent.

14. Wertdokument, umfassend Sicherheitspigmente nach einem der Ansprüche 1 bis 9.

## Claims

1. A security pigment for manufacturing value documents, comprising a duromer matrix comprising an addition polymer and, embedded therein, a plurality of core particles of a thermoplastic polymer with a feature substance dissolved in the core particles, wherein the thermoplastic core particles in the duromer matrix are present in a concentration between 0.1 and 25 weight percent, wherein the feature substance is an organic or an metalorganic substance and the security pigment has a grain size of less than 6 µm.

2. The security pigment according to claim 1, wherein the feature substance is a fluorescent or phosphorescent or photochromic or thermochromic feature substance or a UV or IR or VIS absorption dye.

3. The security pigment according to claim 1 or 2, wherein the fluorescent or phosphorescent feature substance is excitable in the UV spectral range and emits in the visible spectral range.

4. The security pigment according to any one of claims 1 to 3; wherein the fluorescent or phosphorescent feature substance is excitable in the UV spectral range or in the visible spectral range and emits in the IR spectral range.

5. The security pigment according to any one of claims 1 to 4, wherein two different luminescent dyes are present in dissolved form in the core particles, which form an energy transfer system in which the first dye after excitation transfers its excitation energy partially or completely to the second dye.

6. The security pigment according to any one of claims 1 to 5, wherein the thermoplastic polymer is selected from polystyrene (PS), polyacrylates, polyethylene (PE), polypropylene (PP), polycarbonates (PC), polyamides (PA), polyurethanes (PU), polyureas (PH), polyethylene terephthalate (PET) or other polyesters, preferably from polystyrene (PS) or from one of the polyacrylates polymethyl methacrylate (PMMA), polyvinyl acetate (PVAC), polyvinyl chloride (PVC), polyacrylonitrile (PAN), particularly preferably from polystyrene (PS) or polymethyl methacrylate (PMMA).

7. The security pigment according to any one of claims 1 to 6, wherein the chain lengths of the thermoplastic polymer are in the range of 1,000 to 1,000,000 g/mol, in particular at 50,000 to 250,000 g/mol.

8. The security pigment according to any one of claims 1 to 7, wherein the duromer matrix comprises an addition polymer, namely a mixture of different mono-, di- or triamines and a trimeric isocyanate monomer, preferably the isocyanurate trimer of isophorone diisocyanate.

9. The security pigment according to any one of claims 1 to 8, wherein the thermoplastic core particles are present in the duromer matrix at a concentration between 3 to 20 weight percent.

10. A method for manufacturing a security pigment for the manufacture of value documents according to claim 1, having the steps of:
a) the step of dissolving an organic or metalorganic feature substance in a thermoplastic polymer to supply in this manner thermoplastic particles with feature substance dissolved therein;
b) the step of incorporating the thermoplastic particles with feature substance dissolved therein obtained in step a) in a duromer matrix,
c) the step of grinding the product obtained in step b) to security pigments, i.e. the grinding of the pigment particles to a grain size d99 smaller than 6 µm.

11. The method according claim 10, wherein step a) comprises the following partial steps of:
a1) dissolving the thermoplastic polymer and the organic or metalorganic feature substance in an organic solvent,
a2) dispersing the solution of step a1) in an aqueous medium employing a surfactant;
a3) removing the organic solvent;
a4) isolating the core particles;
wherein in step b) the embedding of the core particles is preferably effected through a kneading or extrusion process of the core particles together with the monomers of the addition polymer.

12. In ink concentrate, comprising security pigments in accordance with any one of claims 1 to 9, in particular with a concentration of the security pigments of more than 40 weight percent.

13. A printing ink for offset printing, screen printing or steel intaglio printing, comprising security pigments in accordance with any one of claims 1 to 9, preferably with a concentration of the security pigments of 1 to 40 weight percent, particularly preferably 1 to 20 weight percent.

14. A value document, comprising security pigments in accordance with any one of claims 1 to 9.

## Revendications

1. Pigment de sécurité destiné à la fabrication de documents de valeur, doté d'une matrice duromère comprenant un polymère d'addition ainsi que d'une pluralité de particules-noyau incorporées dans cette dernière, lesquelles sont en un polymère thermoplastique ayant une substance caractéristique dissoute dans les particules-noyau, cependant que les particules-noyau thermoplastiques se trouvent dans la matrice duromère à une concentration comprise entre 0.1 et 25 pourcent par poids, cependant que la substance caractéristique est une substance organique ou organo-métallique et le pigment de sécurité a une taille de grain inférieure à 6 µm.

2. Pigment de sécurité selon la revendication 1, cependant que la substance caractéristique est une substance caractéristique fluorescente ou phosphorescente ou photochromique ou thermochromique ou un colorant d'absorption UV ou IR ou VIS.

3. Pigment de sécurité selon la revendication 1 ou 2, cependant que la substance caractéristique fluorescente ou phosphorescente est excitable dans la plage spectrale UV et émet dans la plage spectrale visible.

4. Pigment de sécurité selon une des revendications de 1 à 3, cependant que la substance caractéristique fluorescente ou phosphorescente est excitable dans la plage spectrale UV ou dans la plage spectrale visible et émet dans la plage spectrale IR.

5. Pigment de sécurité selon une des revendications de 1 à 4, cependant que, dans les particules-noyau, deux colorants luminescents différents se trouvent sous forme dissoute, lesquels constituent un système de transfert d'énergie dans lequel le premier colorant, après excitation, transfère partiellement ou entièrement son énergie d'excitation au deuxième colorant.

6. Pigment de sécurité selon une des revendications de 1 à 5, cependant que le polymère thermoplastique est choisi parmi polystyrène (PS), polyacrylates, polyéthylène (PE), polypropylène (PP), polycarbonates (PC), polyamides (PA), polyuréthanes (PU), polyurées (PH), polyéthylène-téréphtalate (PET) ou autres polyesters, de préférence en polystyrène (PS) ou en un des polyacrylates polyméthacrylate de méthyle (PMMA), acétate de polyvinyle (PVAC), chlorure de polyvinyle (PVC), polyacrylonitrile (PAN), particulièrement de préférence en polystyrène (PS) ou polyméthacrylate de méthyle (PMMA).

7. Pigment de sécurité selon une des revendications de 1 à 6, cependant que les longueurs de chaînes du polymère thermoplastique sont comprises entre 1 000 et 1 000 000 g/mol, en particulier entre 50 000 et 250 000 g/mol.

8. Pigment de sécurité selon une des revendications de 1 à 7, cependant que la matrice duromère comprend un polymère d'addition, à savoir un mélange de différentes monoamines, diamines et triamines et d'un monomère isocyanate trimère, de préférence le trimère d'isocyanate de diisocyanate d'isophorone.

9. Pigment de sécurité selon une des revendications de 1 à 8, cependant que les particules-noyau thermoplastiques se trouvent dans la matrice duromère à une concentration comprise entre 3 et 20 pourcent par poids.

10. Procédé de fabrication d'un pigment de sécurité selon la revendication 1 pour la fabrication de documents de valeur, comportant les étapes :
a) l'étape de la dissolution d'une substance caractéristique organique ou organo-métallique dans un polymère thermoplastique afin de, de cette façon, mettre à disposition des particules de thermoplastique ayant de la substance caractéristique y étant dissoute ;
b) l'étape de l'insertion, dans une matrice duromère, des particules thermoplastiques obtenues à l'étape a) avec de la substance caractéristique y étant dissoute dans les particules-noyau ;
c) l'étape du broyage du produit obtenu à l'étape b), de façon à obtenir des pigments de sécurité, le broyage des particules de pigment de manière à obtenir une taille de grain d99 inférieure à 6 µm.

11. Procédé selon la revendication 10, cependant que l'étape a) comprend les étapes partielles suivantes:
a1) dissolution du polymère thermoplastique ainsi que de la substance caractéristique organique ou organo-métallique dans un solvant organique ;
a2) dispersion de la solution de l'étape a1) dans un milieu aqueux en utilisant un tensioactif ;
a3) enlèvement du solvant organique ;
a4) isolation des particules-noyau ;
cependant que, à l'étape b), l'incorporation des particules-noyau a de préférence lieu par un processus de pétrissage ou d'extrusion des particules-noyau conjointement avec les monomères du polymère d'addition.

12. Concentré de couleur comprenant des pigments de sécurité selon une des revendications de 1 à 9, en particulier à une concentration des pigments de sécurité supérieure à 40 pourcent par poids.

13. Encre d'impression pour impression offset, sérigraphie ou impression en creux par gravure acier, comprenant des pigments de sécurité selon une des revendications de 1 à 9, de préférence à une concentration des pigments de sécurité comprise entre 1 et 40 pourcent par poids, particulièrement de préférence comprise entre 1 et 20 pourcent par poids.

14. Document de valeur comprenant des pigments de sécurité selon une des revendications de 1 à 9.
